# FASCICULE DE BREVET EUROPEEN

(11) **EP 0 388 307 B1**
(45) Date de publication et mention de la délivrance du brevet: **02.06.1993**
(21) Numéro de dépôt: 90400700.2
(22) Date de dépôt: 15.03.1990
(51) Int. Cl.: B60N 3/00

(54) **Dispositif destiné à constituer un plan de travail aménageable à l'arrière d'un véhicule utilitaire**
Anordnung zum Bilden einer Haushaltsarbeitsplatte im hinteren Teil eines Nutzfahrzeuges
Arrangement for forming a household worktop in the rear part of a commercial vehicle

(30) Priorité: 15.03.1989 FR 8903394
(43) Date de publication de la demande: 19.09.1990
(73) Titulaire: Mercier, Jean-Louis Henri Robert, F-75015 Paris 15é (FR)
(72) Inventeur: Mercier, Jean-Louis Henri Robert, F-75015 Paris 15é (FR); Bruneau, Jean-Michel, F-60210 Grandvilliers (Oise) (FR)
(74) Mandataire: Cabinet HERRBURGER

(56) Documents cités:
- US-A- 3 534 892
- US-A- 3 896 742
- US-A- 4 029 223
- US-A- 4 236 461
- US-A- 4 511 173

## Description

L'invention concerne un dispositif destiné à constituer un plan de travail aménageable à l'arrière d'un véhicule utilitaire pouvant servir de petit établi en position horizontale usuelle et dont le logement en partie haute, après usage, permet l'utilisation totale du volume de rangement du véhicule.

Dans ce domaine, il est connu une planche escamotable articulée dans un coffre de voiture se déployant en plusieurs panneaux à l'extérieur de celui-ci et pourvue de piètements reposant sur le sol.

Le rangement d'un tel ensemble mobilise la totalité du coffre et n'assure pas le support de charges importantes en position déployée car il fait appel à des pieds télescopiques en appui au sol.

Il est d'autre part connu au niveau mobilier des tables escamotables pour repliage contre un mur, mais de telles tables ne sont pas adaptables à un véhicule car leur mouvement de déploiement et de rangement nécessite que tout le volume arrière soit dégagé, empêchant ainsi le transport de toutes marchandises.

Un autre dispositif de ce genre pour véhicules utilitaires est connu par example par US-A-3 534 892, correspondant au préambule de la revendication indépendante.

L'objet de l'invention est de fournir un dispositif évitant ces inconvénients grâce aux caractéristiques décrites dans la partie caractérisante de la revendication indépendante.

D'autres caractéristiques de l'invention sont décrites dans les revendications dépendantes.

En particulier, ce dispositif est constitué de quatre galets fixés aux quatre extrémités d'un plateau de travail adapté à la largeur intérieure du véhicule, lesdits galets servant de guide dans des rails; ce plateau de travail est adapté à la largeur du véhicule recevant les articulations d'un piètement, avec un clip de fixation, une découpe servant de poignée, et des évidements recevant l'axe des galets; le piètement en tube est relié par une articulation solidaire de la base du plan et l'extrémité inférieure est destinée à se loger sur des appuis disposés en partie basse des deux rails.

Deux rails en U fermé pourvus de moyens de fixation aux parties latérales intérieures du véhicule et constitués d'un premier tronçon vertical permettent un déplacement parallèle vertical du plateau puis sont prolongés par un tronçon arrondi à 90° pour finir par une partie horizontale avec butée en extrémité. La partie supérieure du tronçon vertical des rails comporte un évidement permettant l'introduction des galets et une butée inférieure permettant l'arrêt du galet en phase de mise du plan à l'horizontale.

Un verrou fixé sur le champ du plan de travail permet le verrouillage en position haute en fixation dans un trou aménagé à cet effet dans le rail.

Les deux pièces d'appui soudées, situées en partie basse et extrême du rail sont en forme d'équerre et servent de calage pour la mise en place des piètements.

Une pièce de renfort en U est prévue venant se fixer par goupilles ou vis à papillon sur l'arrière du plan de travail et dont les extrémités sont destinées à venir se bloquer dans des platines pourvues de moyen de fixation dans la caisse et donc indépendante du système de guidage.

Les dessins joints représentent :

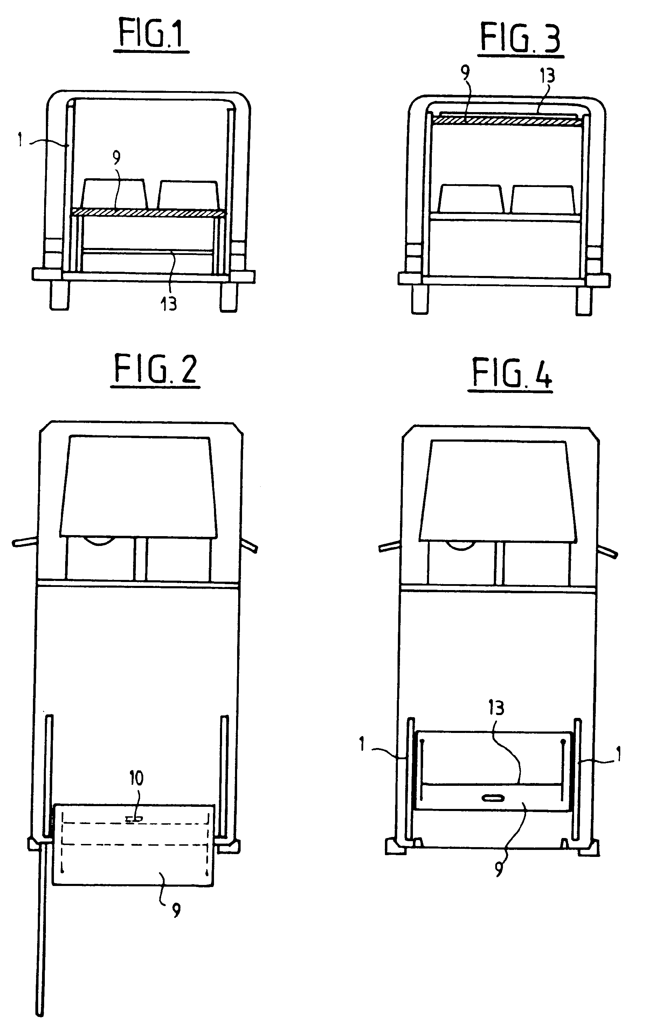

Les figures 1 et 2 une représentation en vue arrière et de dessus de l'arrière du véhicule, le plateau de travail étant en position horizontale d'utilisation.
Les figures 3 et 4 représentent en vue arrière et de dessus de l'arrière du véhicule, le plateau de travail en position haute de rangement.
Les figures 5, 6, 7, 8 montrent le mouvement en quatre étapes permettant le rangement ou la mise en place du plateau de travail.

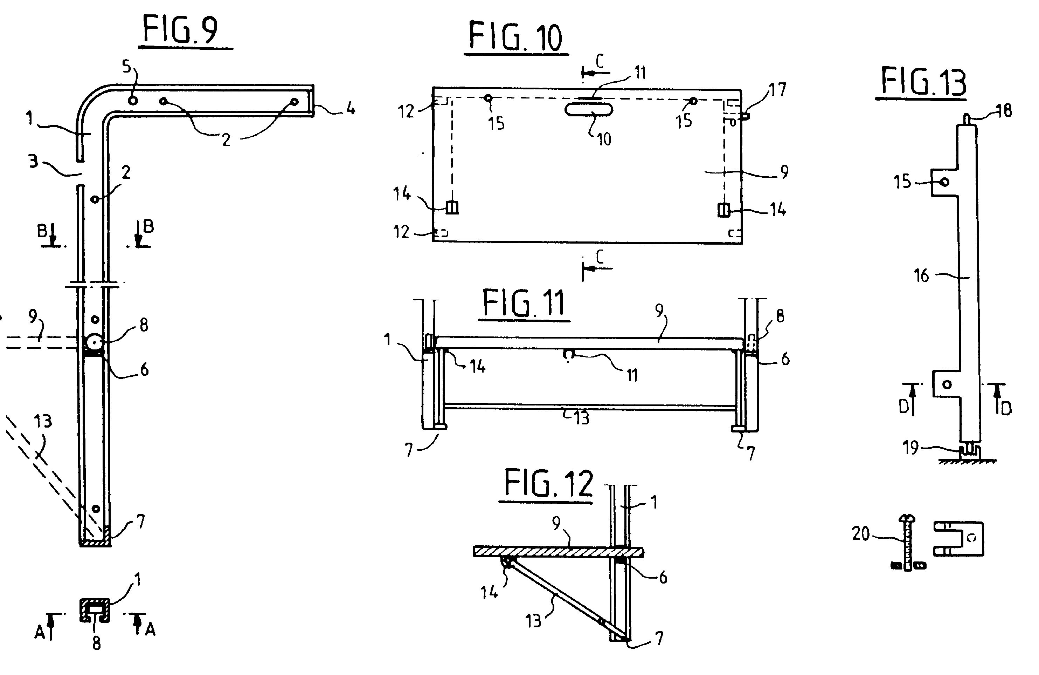

La figure 9 montre le schéma du rail, avec coupe selon AA et BB.
La figure 10 montre le plateau de travail en vue de dessus.
La figure 11 montre le plateau de travail en position d'utilisation, en vue arrière du véhicule.
La figure 12 montre le plateau de travail en position d'utilisation, en coupe selon CC de la figure 10.
La figure 13 montre une pièce de renfort, en vue de dessus et en coupe, selon DD avec platine 19 destinée à être fixée sur la caisse.

En référence aux dessins, le dispositif selon l'invention se compose d'un profilé de déplacement 1 en forme de U à rebords de retenue disposés en vis à vis à l'extrémité de ses ailes, à section fermée en oméga coudé à 90° et situé de chaque côté du véhicule enfermant les galets de guidage 8 en cas de vibrations par exemple du plan de travail et comportant des trous de fixation 2 au nombre de cinq ou six, pour mise en place des pièces de raccordement entre les rails et les parois du véhicule suivant les dimensions intérieures.

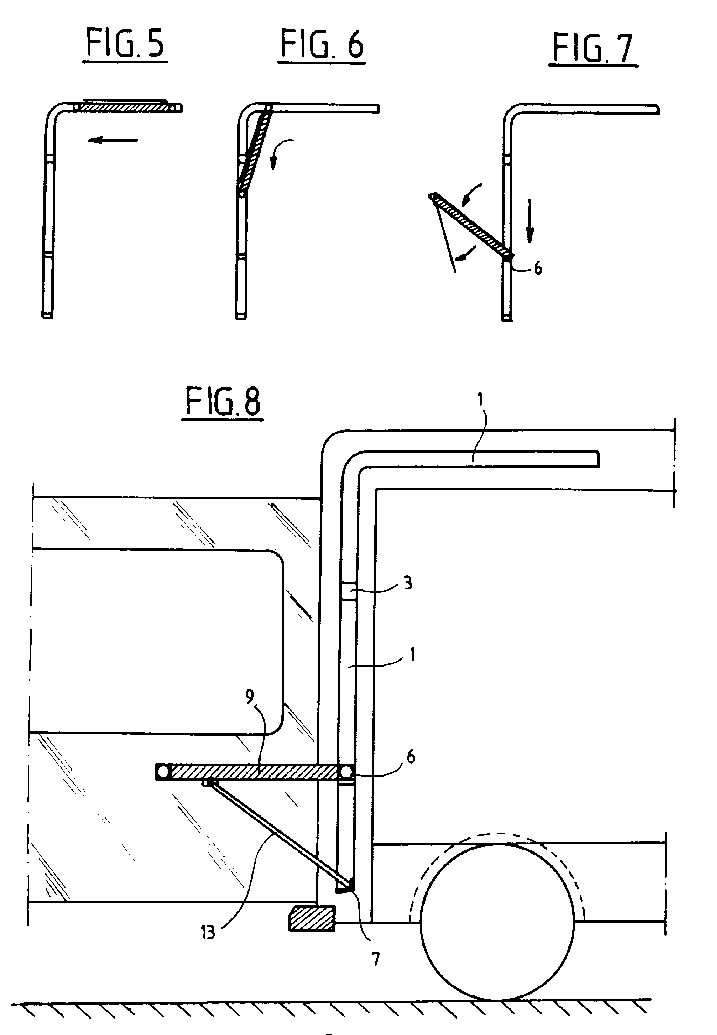

Un évidement 3 dans chaque rail vertical 1 en partie haute permet l'insertion des galets 8 fixés en bout du plan de travail 9 du côté extérieur ; ces galets sont nécessaires au mouvement de rangement ou de mise en place de l'ensemble (voir figures 5, 6, 7, 8 - dessins de mouvements).

Une butée de rail 4 est prévue au bout des parties horizontales des rails position rangement.

Un trou pour verrouillage 5 sur l'un des rails reçoit la targette du verrou 17 fixé sur la tranche du plan de travail.

Une butée de table 6 sur chaque rail vertical en partie basse pour arrêt du plan de travail 9 permet la mise en place en position horizontale.

Une cale 7, en forme d'équerre soudée en partie basse du rail, est destinée à recevoir les piètements 13 en position utilisation. Le rail doit être dans un matériau d'une résistance suffisante aux efforts demandés.

Un plan de travail ou plateau 9 ou petit établi constitué d'une planche, d'un matériau adapté à l'utilisation composé d'un évidement 10 servant de poignée de manutention, d'un clip 11, permet l'accrochage du piètement 13 en position fermeture, de quatre évidements 12 pour recevoir les galets 8 de guidage et de support dans les rails 1, de deux trous 15 permettant la fixation d'une pièce de renfort 16 pour l'utilisation, lors de travaux où s'exerce une torsion, d'un verrou 17 permettant le blocage du plan en position de rangement haut.

Un piètement 13 en tubes comporte deux pieds latéraux pivotant sur deux articulations 14 fixées en sous face du plan de travail et dont les extrémités viennent se bloquer dans les cales 7 en position d'utilisation ; l'ensemble du piètement étant consolidé en écartement par une entretoise permettant une mise en place facile pour l'utilisation ou pour le rangement grâce au clip 11 (figures 5, 6, 7, 8).

Une pièce de renfort 16 pour utilisation spéciale en torsion comportant une barre en U se positionne en bout de plan et fixée par goupille ou vis à papillon 20 dans les trous 15 comportant aux extrémités deux embouts 18 venant s'insérer pour fixation dans deux platines 19 vissées ou soudées sur la caisse du véhicule.

Il convient de prévoir sur la pièce de renfort 16 une découpe correspondant à l'emplacement du verrou 17 fixé sur la tranche du plan de travail 9.

La disposition selon l'invention, par le fait de la simplicité avec laquelle elle peut être mise en place, a l'avantage de permettre un gain de temps appréciable (mise en chantier, installation...) et d'apporter un confort certain à l'utilisateur sans notamment nécessiter d'appui sur le sol et sans empiéter sur le volume de transport du véhicule.

De nombreuses entreprises dans le domaine public ou privé, pour des travaux d'entretien de courte durée (plombier, électricien, chauffagiste et autres...) pourront utiliser ce support pour assembler, façonner, étaler des plans lors d'un rendez-vous de chantier directement à pied d'oeuvre.

Le véhicule peut être équipé de rangements latéraux sur lesquels se fixeront les rails, ou être encombré sans gêner l'utilisation du plan de travail. En effet, la position rangement étant située en partie haute du toit, la manoeuvre s'effectue sans empiéter sur le volume intérieur. Le plan de travail en position horizontale dépassant aux 2/3 à l'extérieur du véhicule permet une position debout de l'utilisateur.

## Revendications

1. Dispositif destiné à constituer un plan de travail à l'arrière d'un véhicule utilitaire, pour servir de petit établi en position horizontale, dispositif comprenant une plaque formant planche de travail (9) adaptée à la largeur intérieure du véhicule, comportant des galets (8) de guidage, caractérisé en ce que lesdits galets (8), au nombre de quatre, sont fixés sensiblement aux quatre extrémités de la plaque formant la planche de travail, et en ce qu'il comprend en outre deux rails munis de moyens de fixation aux parties latérales intérieures du véhicule et comprenant chacun un premier tronçon vertical suivi d'un tronçon arrondi et se poursuivant par une partie horizontale avec une butée (4) en extrémité, ces rails étant destinés à recevoir chaque fois deux galets de chaque côté de la plaque formant la planche de travail (9), la partie supérieure du tronçon vertical des rails comportant un évidement (3) pour permettre l'introduction des galets et une butée inférieure (6) pour arrêter les galets en position de mise à l'horizontale du plateau.

2. Dispositif selon la revendication 1, caractérisé en ce que le plateau est muni d'un piètement (13) pour soutenir le plateau en position horizontale.

3. Dispositif selon l'une quelconque des revendications 1 et 2, caractérisé en ce qu'il comporte deux piètements en tubes reliés au plateau (9) chacun par une articulation (14) solidaire de la base et des appuis prévus en partie basse des rails pour recevoir chacun un piètement.

4. Dispositif selon l'une quelconque des revendications 1 à 3, caractérisé en ce que le plateau (9) comporte un moyen d'enclipsage pour fixer le piètement en position repliée, une découpe (10) servant de poignée et des évidements (12) recevant chacun un axe des galets.

5. Dispositif selon l'une quelconque des revendications 1 à 4, caractérisé par un verrou (17) fixé sur le champ du plateau de travail (9) pour permettre le verrouillage en position haute du plateau en se fixant dans un trou (5) réalisé à cet effet dans l'un au moins des rails (1).

6. Dispositif selon l'une quelconque des revendications 1 à 3, caractérisé en ce qu'il comporte deux pièces d'appui (7) soudées, situées en partie basse et extrême du rail, en forme d'équerre, servant de calage pour la mise en place du piètement.

7. Dispositif selon l'une quelconque des revendications précédentes 1 à 6, caractérisé en ce qu'il comporte en outre une pièce de renfort en U (16) se fixant par des goupilles ou des vis à papillon (20) sur l'arrière du plan de travail et dont les extrémités sont destinées à venir se bloquer dans des platines (16) pourvues de moyens de fixation dans la caisse, indépendamment du système de guidage.

## Patentansprüche

1. Vorrichtung zum Bilden einer Arbeitsebene am Heck eines Nutzfahrzeuges, um als kleiner Arbeitstisch in horizontaler Position zu dienen, wobei die Vorrichtung eine an die Größe des Fahrzeuginneren angepaßte Platte umfaßt, die eine Arbeitsplatte (9) bildet und Führungsrollen (8) aufweist,
**dadurch gekennzeichnet,**
daß vier Rollen (8) an vier Enden der die Arbeitsplatte bildenden Platte merklich befestigt sind und daß die Vorrichtung außerdem zwei Schienen umfaßt, die mittels Befestigungselementen an seitlichen inneren Teilen des Fahrzeuges angebracht sind und von denen jede einen ersten senkrechten Abschnitt umfaßt, dem ein abgerundeter Abschnitt und ein nachfolgender waagerechter Teil mit einem Anschlag (4) am Ende folgt, wobei die Schienen dazu bestimmt sind, jeweils zwei Führungsrollen jeder Seite der die Arbeitsplatte (9) bildenden Platte aufzunehmen, wobei der obere Teil des senkrechten Abschnitts der Schienen eine Aussparung (3) zum Ermöglichen eines Einführens der Rollen und einen inneren Anschlag (6) zum Feststellen der Rollen für eine horizontale Position der Platte umfaßt.

2. Vorrichtung nach Anspruch 1,
**dadurch gekennzeichnet,**
daß die Platte mit einer Stütze (13) zum Halten der Platte in horizontaler Position versehen ist.

3. Vorrichtung nach irgendeinem der Ansprüche 1 und 2,
**dadurch gekennzeichnet,**
daß die Vorrichtung zwei rohrförmige Stützen, die mit der Platte (9) jeweils über ein ein integrales Teil der Unterseite bildenden Gelenk (14) verbunden sind, und am unteren Teil der Schienen vorgesehene Auflager zum Aufnehmen jeweils einer Stütze umfaßt.

4. Vorrichtung nach irgendeinem der Ansprüche 1 bis 3,
**dadurch gekennzeichnet,**
daß die Platte (9) eine Einrasteinrichtung zum Befestigten der Stütze in eingeklappter Stellung, einen als Griff dienenden Ausschnitt (10) und jeweils eine Achse der Rollen aufnehmende Ausnehmungen (12) umfaßt.

5. Vorrichtung nach irgendeinem der Ansprüche 1 bis 4,
**gekennzeichnet** **durch**
einen auf der Fläche der Arbeitsplatte (9) zum Ermöglichen des Verriegelns der Platte in hoher Position angebrachten Bolzen (17), der in ein Loch (5) eingreift, das hierfür in zumindest einer der Schienen (1) vorhanden ist.

6. Vorrichtung nach irgendeinem der Ansprüche 1 bis 3,
**dadurch gekennzeichnet,**
daß die Vorrichtung zwei geschweißte Auflager (7) in Form von Winkeln umfaßt, die sich am unteren und äußersten Abschnitt der Schiene befinden und als Verkeilung zum Festhalten der Stützen dienen.

7. Vorrichtung nach irgendeinem der Ansprüche 1 bis 6,
**dadurch gekennzeichnet,**
daß die Vorrichtung außerdem ein Verstärkungsteil (16) in U-Form umfaßt, das hinten an der Arbeitsfläche über Stifte oder Flügelschrauben befestigt ist und dessen Enden dazu bestimmt sind, in sich unabhängig vom System der Führungals Befestigungsmittel im Fahrzeug vorgesehenen Platten (19) festklemmen zu lassen.

## Claims

1. Device for forming a work top at the rear of a commercial vehicle in order to serve as a small work bench in the horizontal position, which device comprises a plate forming a work top (9) is adapted to the internal width of the vehicle, and comprises guide rollers (8), characterised in that the said rollers (8), of which there are four, are secured substantially to the four ends of the plate forming the work top, and in that it further comprises two rails provided with means for fastening to the inner lateral parts of the vehicle, and each comprising a first vertical section followed by a curved section and continued by a horizontal section with a stop (4) at the end, each of these rails being designed to receive two rollers on each side of the plate forming the work top (9), the upper part of the vertical section of the rails comprising a recess (3) to allow the insertion of the rollers and a lower stop (6) for stopping the rollers in the position in which the plate is rendered horizontal.

2. Device according to Claim 1,
characterised in that the plate is provided with an underframe (13) for supporting the plate in the horizontal position.

3. Device according to either of Claims 1 and 2, characterised in that it comprises two underframes consisting of tubes each connected to the plate (9) by a hinge (14) which is integral with the underframe and supports provided in the lower part of the rails such that they can each accommodate an underframe.

4. Device according to any one of Claims 1 to 3, characterised in that the plate (9) comprises clip means for securing the underframe in the folded position, a cut-away section (10) being used as a handle, and recesses (12) each accommodating a roller shaft.

5. Device according to any one of Claims 1 to 4, characterised by a locking device (17) secured on the edge of the work top (9) in order to enable the plate to be locked in the upper position as a result of being secured in a hole (5) provided for this purpose in at least one of the rails (1).

6. Device according to any one of Claims 1 to 3, characterised in that comprises two welded bearing parts (7) located in the bottom and end part of the rail, in the form of a bracket, used as a wedge for positioning the underframe.

7. Device according to any one of the preceding claims, characterised in that it further comprises a U-shaped reinforcing part (16) which is secured by pins or butterfly screws (20) to the rear of the work top, and of which the ends are designed to be blocked in small plates (16) provided with means for securing them in the casing, independently of the guide system.
